# EUROPEAN PATENT SPECIFICATION

(11) **EP 0 283 221 B1**
(45) Date of publication and mention of the grant of the patent: **22.09.1993**
(21) Application number: 88302158.6
(22) Date of filing: 11.03.1988
(51) Int. Cl.: G11B 17/03, G11B 17/028, G11B 23/00

(54) **Apparatus for modifying the diameter of a disc-like recording medium**
Vorrichtung zum Ändern des Durchmessers eines scheibenförmigen Auszeichnungsträgers
Appareil pour modifier le diamètre d'un support d'enregistrement en forme de disque

(30) Priority: 14.03.1987 JP 59668/87; 14.03.1987 JP 59669/87; 14.03.1987 JP 59670/87; 30.11.1987 JP 302060/87
(43) Date of publication of application: 21.09.1988
(73) Proprietor: SONY CORPORATION, Tokyo 141 (JP)
(72) Inventor: Yamamori, Eiji Patents Division Sony Corporation, Tokyo 141 (JP)
(74) Representative: Thomas, Christopher Hugo

(56) References cited:
- EP-A- 0 170 957
- DE-B- 1 168 666
- FR-B- 2 346 801
- US-A- 2 285 139
- US-A- 3 801 110

## Description

This invention relates to apparatus for modifying the diameter of a disc-like recording medium, such as an optical disc, an opto-magnetic disc or a magnetic disc.

An optical disc player is known in which information signals recorded on an optical recording medium are read and reproduced by contactless scanning by an optical pick-up device. The optical disc has only its central non-recorded area clamped to a disc table of a disc driving unit, so that it rotates with the disc table with the signal record area facing the optical pick-up device.

It is necessary that the disc drive unit with the optical disc, and the optical pick-up device be accurately positioned relative to each other to achieve accurate reading and reproduction of the information signals. The disc drive unit is therefore supported with accurate positioning by a chassis base plate provided in the main body of the player, while the optical pick-up unit is slidably supported on a guide shaft mounted with accurate positioning relative to the chassis base plate.

A disc loading device by which the optical disc is automatically mounted on the disc drive unit is so arranged as to transport the optical disc only, for attachment to the disc drive unit. A player having such a disc loading device is shown in Japanese laid-open utility model application 145367/1986 or in Japanese laid-open patent publication 231966/1985.

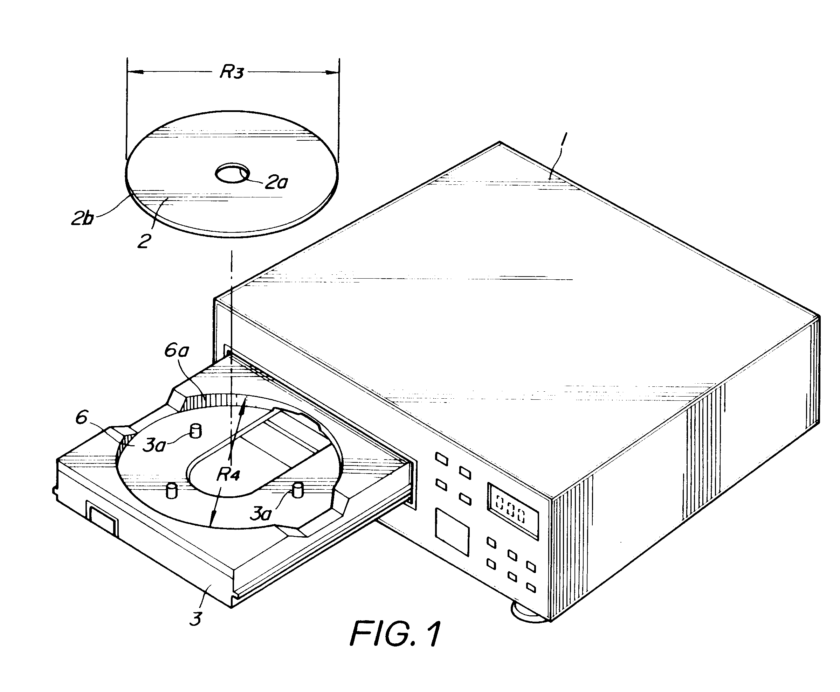

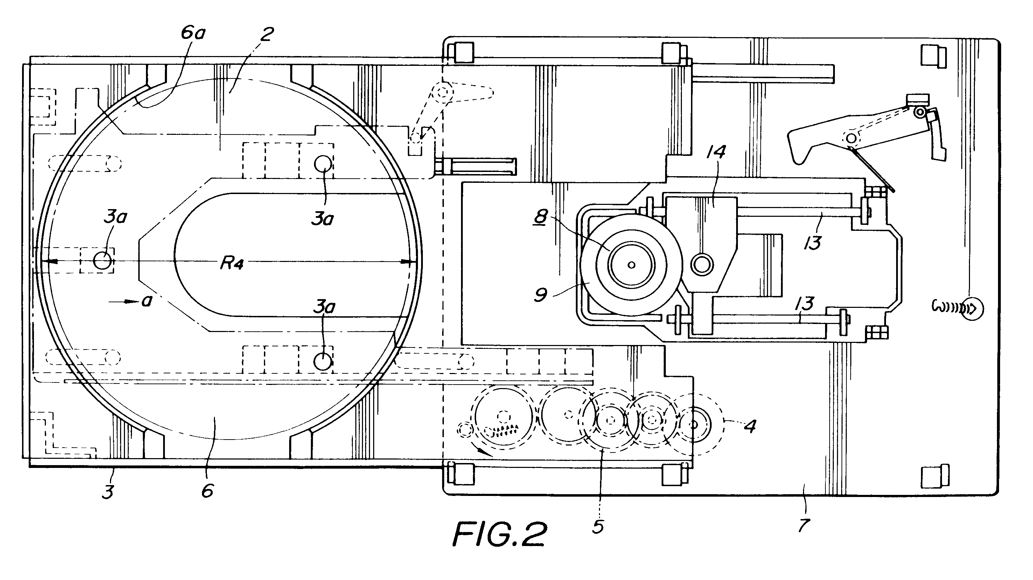

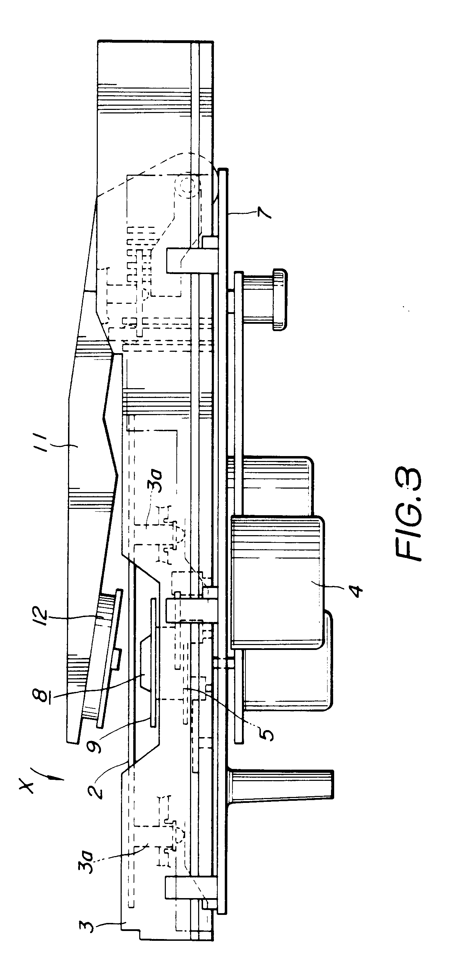

As shown in Figure 1 of the accompanying drawings, in the player 1 shown in Japanese laid-open utility model application 145367/1986, a disc transfer table 3 on which an optical disc 2 rests, is mounted so as to be movable within and exteriorly of a main body of the player 1. The table 3 is transferred into the interior of the main body of the player 1 in the direction a in Figure 2 of the accompanying drawings by drive gearing 5 actuated by a drive motor 4, until the disc 2 held in an annular recess 6 formed in the table 3 is at a position confronting a disc table 9 of a disc drive unit 8 supported on a chassis base plate 7 within the main body of the player 1. (See also Figure 3 of the accompanying drawings.) A disc supporting member 3a projecting vertically movably from the bottom surface of the annular recess 6 for supporting the disc 2 may be actuated so that the disc 2 may be placed on and attached to the disc table 9 with a central opening 2a of the disc 2 in alignment with the centre of the disc table 9. After the disc 2 has been attached in this manner to the disc table 9, a chucking arm 11 is turned towards the disc table 9 in the direction X in Figure 3 until a disc clamper 12 attached to the end of the chucking arm 11 is pressed onto the disc 2, so that the disc 2 can be rotated with the disc table 9.

The disc 2 thus clamped to the disc table 9 is confronted by an optical pick-up unit 14 slidably supported by guide shafts 13 mounted on the chassis base plate 7.

In such a disc loading device, it is necessary that the disc 2 be supported at the controlled position on the disc transfer table 3, so as to provide for accurate and positive attachment of the optical disc to the disc table 9. To this end, the annular recess 6 has a radius R4 corresponding to the radius R3 of the disc 2 supported therein, and the outer peripheral surface 2b of the disc 2 is supported by the upright peripheral surface 6a of the annular recess 6 to control the support position of the disc 2.

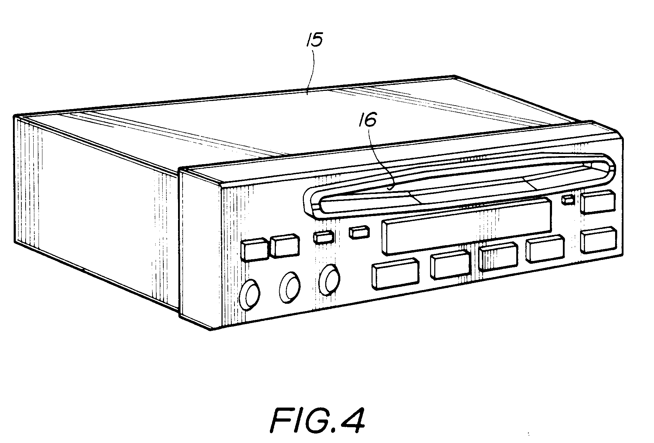

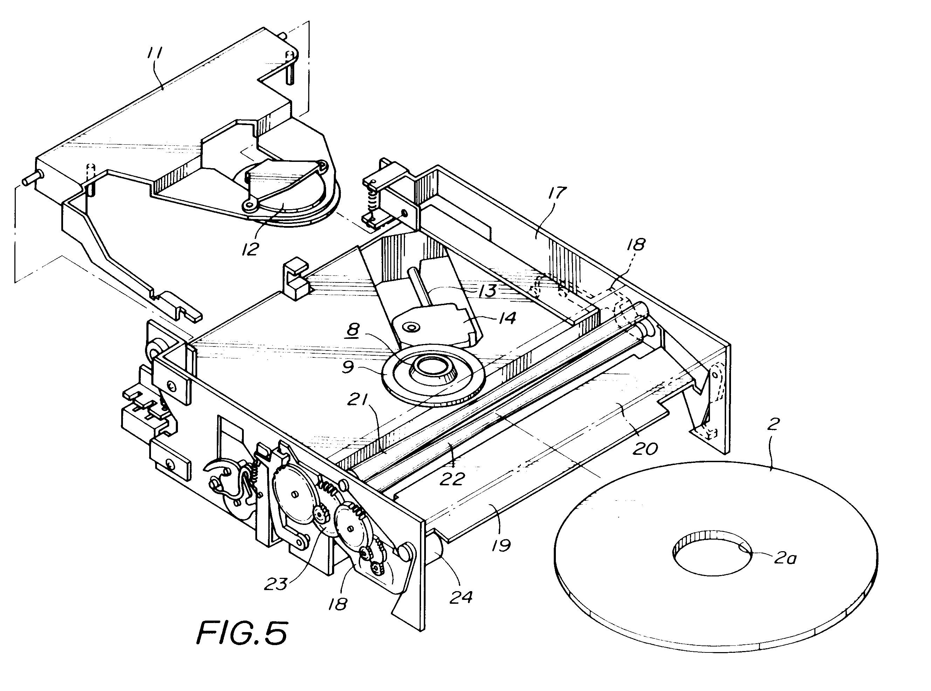

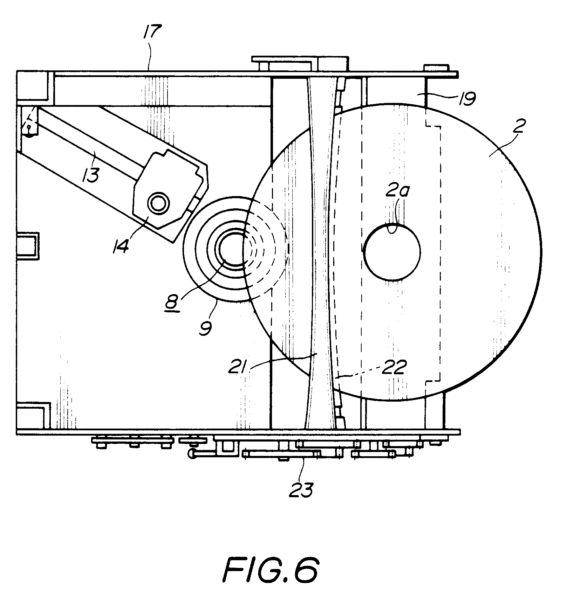

As shown in Figure 4 of the accompanying drawings, in the player 15 shown in Japanese laid-open patent publication 231966/1985, a disc inserting opening 16 is provided in the main body of the player 15. In the vicinity of the disc inserting opening 16, there are provided a stationary guide plate 20, and a movable guide plate 19 facing the stationary guide plate 20, and mounted through the medium of loading arms 18, rotatably supported by frames 17 (see Figure 5 of the accompanying drawings). The disc 2 is introduced into the main body of the player 15 through a gap formed by the guide plates 19 and 20. A pair of rollers, that is a stationary roller 21 and a driving roller 22, each having a reduced diameter at the centre, and having diameters gradually increasing towards both ends, are provided at a position to receive the disc 2 inserted through the gap defined between the guide plates 19 and 20. The disc 2 is clamped between the rollers 21 and 22. The driving roller 22 is transferred onto the disc table 9 of the rotary driving unit 8 mounted inside the main body of the player 15, by a driving electric motor 24, through a drive gearing 23 as shown in Figure 6 of the accompanying drawings, for mounting the disc 2.

When the disc 2 has been transferred onto the disc table 9, the loading arms 18 are turned to lower the driving roller 22 and the movable guide plate 19 for attaching the disc 2 to the disc table 9 with the central opening 2a of the disc 2 in alignment with the centre of the disc table 9. Following the lowering of the roller 22 and the guide plate 19, the chucking arm 11 is turned until the disc clamper 12 at the arm end presses the disc 2, so that it is clamped for rotation with the disc table 9.

There is also known a disc player in which the optical disc is not clamped automatically to the disc table, but in which a cover fitted with a disc clamper in opposition to the disc table of the disc drive device mounted in a substantially vertical position within the main body of the player is mounted for rotation relative to a player cabinet accommodating the main body of the player, so that the disc is clamped for rotation in an upright position. The cover is provided with a disc position regulating member for regulating the radial stroke of the disc to provide for optimum clamping by the disc clamper and the disc table. This cover is rotated with the disc placed thereon with the stroke of the disc movement being controlled by the disc position regulating member so that the disc is clamped to the disc table. The disc position regulating member is provided at a position corresponding to the outer periphery of the disc for causing the central opening of the optical disc to coincide with the centre of the disc table, for centring the disc relative to the disc table to regulate the position of the optical disc.

In all the above disc players, an optical disc having a predetermined disc diameter is necessarily employed, and the player will not accept a disc of different diameter.

There have, however, been proposed optical discs having sizes dependent upon the amount of recorded information. Since an optical disc is capable of recording an extremely large amount of information, when recording a small amount of the information, most of the signal record area carries no recorded signals. Thus an optical disc of a reduced size has been proposed in order to make efficient use of the disc material and the signal record area.

Patent Specification US-A-2 285 139 discloses a disc holder in the form of a strip of flexible material bent around into the shape of a C, the member so formed having engaging portions on its inner periphery to engage the edge of a disc, the two ends of the strip of material being movable apart to enable a disc to be engaged with or disengaged from the engaging portions.

According to the present invention there is provided apparatus for modifying the diameter of a disc-like recording medium comprising a holder larger outside in diameter than the disc-like recording medium, the holder being designed to hold the disc-like recording medium firmly therein and to enable signals recorded on the disc-like recording medium to be read out while the disc-like recording medium is held by the holder, characterised in that the holder is a toroidal member and is provided with holding means for the recording medium comprising at least one resilient thrusting section which is independently resiliently deflectable in a direction radially of the recording medium held thereby.

The invention will now be described by way of example with reference to the accompanying drawings, throughout which like parts are referred to by like references, and in which:
Figure 1 is a perspective view of a known disc player having a disc transfer table;
Figure 2 is a plan view showing the inside structure of the player of Figure 1;
Figure 3 is a side view illustrating clamping of an optical disc;
Figure 4 is a perspective view of another known disc player wherein loading of a disc is accomplished by a pair of rollers;
Figure 5 is a perspective view showing the inside structure of the player of Figure 4;
Figure 6 is a plan view showing loading of the disc;
Figure 7 is a perspective view showing a first embodiment of apparatus for modifying the diameter of a disc-like recording medium and according to the present invention;
Figure 8 is a plan view with a small size disc being held;
Figure 9 is an enlarged sectional view taken along line A-A of Figure 8;
Figure 10 is a perspective view of a second embodiment;
Figure 11 is a plan view showing a small size disc being held;
Figure 12 is an enlarged sectional view taken along line B-B of Figure 11, with portions broken away;
Figure 13 is a plan view showing a small size disc being held;
Figure 14 is an enlarged sectional view taken along line C-C of Figure 13, with portions broken away;
Figure 15 is an enlarged sectional view taken along line D-D of Figure 13;
Figure 16 is a plan view of a third embodiment;
Figure 17 is an enlarged sectional view taken along line E-E of Figure 16 with portions broken away;
Figure 18 is an enlarged sectional view taken along line F-F of Figure 16 with portions broken away;
Figure 19 is an enlarged sectional view taken along line G-G of Figure 16;
Figure 20 is an enlarged sectional view taken along line H-H of Figure 16;
Figure 21 is a plan view showing a small size disc being held;
Figure 22 is an enlarged sectional view taken along line I-I of Figure 21 with portions broken away;
Referring to Figure 7, the first embodiment comprises an annular (toroidal) holder 125 having an outside diameter R1 the same as the diameter R3 of an optical disc 2 which is a standard so-called compact disc having a diameter of 12cm.

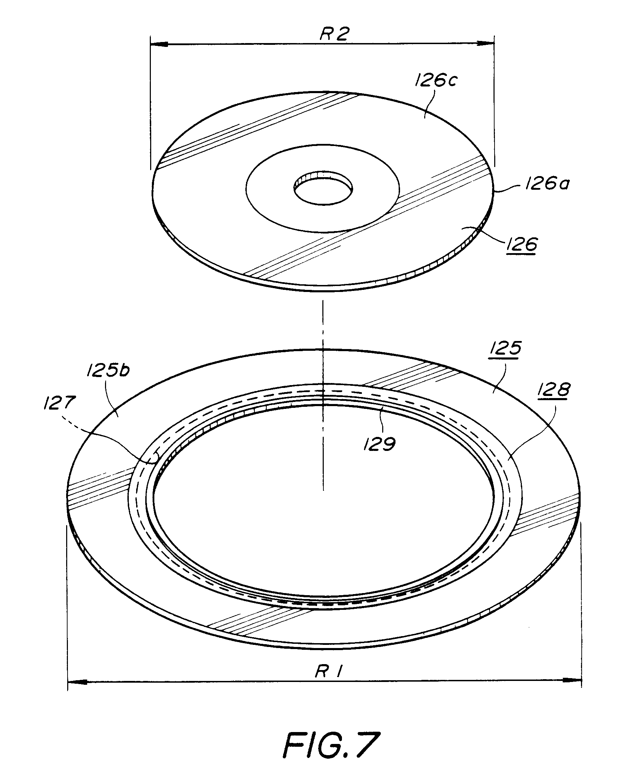

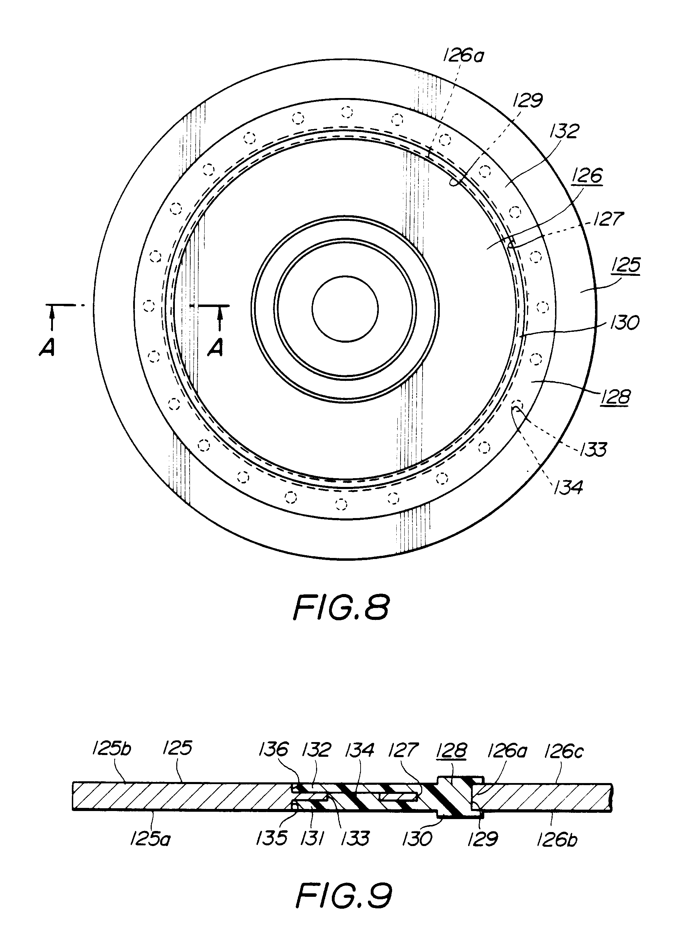

The holder 125 is formed of synthetic material, such as ABS resin, having a predetermined rigidity, and has a thickness approximately equal to that of the disc 2. On the side of the inner periphery of the holder 125, there is formed a disc fitting opening 127 in which can be fitted a small size disc 126 having a diameter R2, for example 8cm, which is less than that of the disc 2. On the periphery of the opening 127 there is mounted a toroidal disc holding member 128 of rubber or resilient synthetic material for holding the outer peripheral portion 126a of the small disc 126. As shown in Figure 9, the holding member 128 comprises a disc holding portion 130 having its inner peripheral surface formed with a disc engaging groove 129 for engaging the outer peripheral portion 126a of the small disc 126, and a pair of clamping pieces 131 and 132 for the holder 125 extending outwardly from the holding portion 130. On the inner side of the clamping piece 131, there are formed a number of engaging projections 134 for engaging in a corresponding number of mating engaging openings 133 formed in the holder 125 along the opening 127. The holding member 128 is fitted to the inner periphery of the holder 125, as shown in Figures 7 and 8, with the clamping pieces 131 and 132 clamping the periphery of the holder 125 in the vicinity of the opening 127, and with the projections 134 engaging with the openings 133.

The portion of the holder 125 clamped by the clamping pieces 131 and 132 is formed with steps 135 and 136 and is thus reduced in thickness such that the clamping pieces 131 and 132 lie substantially flush with both sides of the holder 125.

When only one side of the small disc 126 has a signal record surface, it can be positioned relative to the optical pick-up device in the player only in a predetermined orientation. For indicating the orientation of the small disc 126, one surface of the holder 125 has a mirror surface 125a, that is, the same optical properties as the recording surface 126b of the small disc 126. The other surface bear sprinted handling instructions similar to the other surface 126c of the small disc 126.

For indicating the attachment orientation of the small disc 126, any other suitable indicating means such as labels or stamping may be employed.

The small disc 126 is fitted to the holding member 128 with the recording surface 126b on the same side as the mirror surface 125a of the holder 125. When the small disc 126 is to be introduced into the holding member 128, the engaging groove 129 is deformed resiliently so that the outer peripheral portion 126a of the disc 126 can be introduced and fitted into the fitting groove 129 to hold the small disc 126 as indicated in Figure 8.

With the small disc 126 supported in this manner, the small disc 126 is made as one with the holder 125 and thus the resulting assembly is equivalent to an optical disc of standard diameter, and the assembly can be handled in the same manner as such an optical disc.

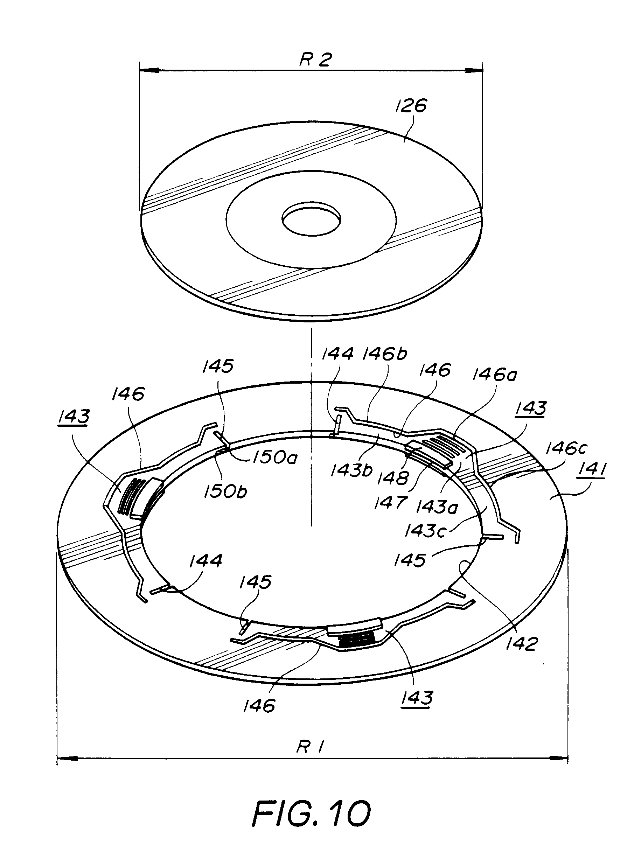

As shown in Figure 10, the second embodiment also has an annular (toroidal) holder 141 having an outside diameter R1 the same as the diameter R3 of a standard optical disc 2 widely employed as a compact disc.

The holder 141 is formed of synthetic material, such as ABS resin, having a predetermined rigidity, and has approximately the same thickness as the disc 2. The inner peripheral side of the holder 141 is formed with a disc fitting opening 142 for receiving a small size disc 126 having a radius R2 of, for example, 8cm.

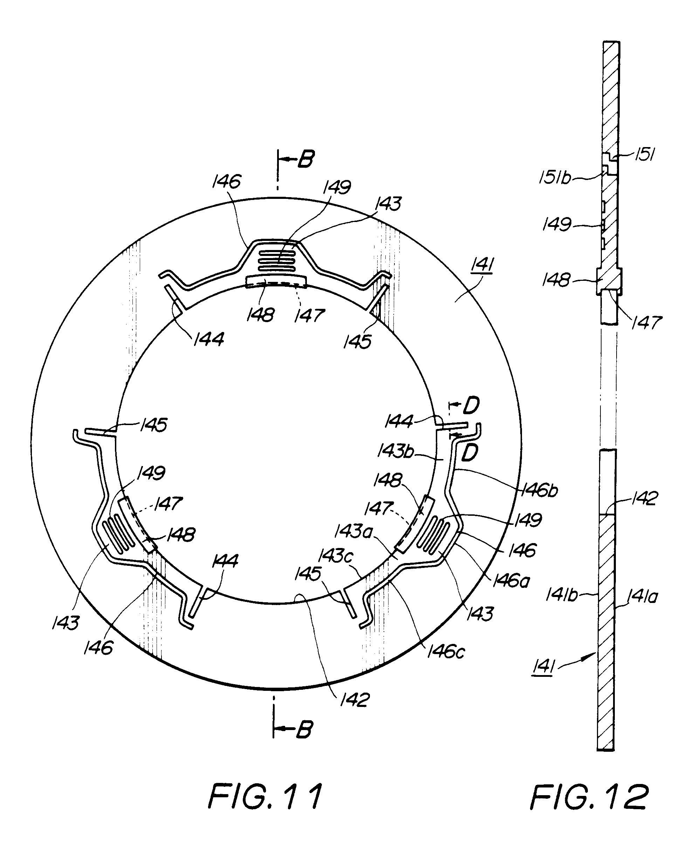

As shown in Figures 10 and 11, on the periphery of the opening 142, the holder 141 is formed with three equiangular disc holding sections 143 that may be resiliently deflected radially of the holder 141. Each of the holding sections 143 is formed integrally in the holder 141 by forming a pair of slits 144 and 145 radially extending some distance from the opening 142, and a peripheral slit 146 extending between near the end portions of the radial slits 144 and 145. The peripheral slit 146 comprises a central slit portion 146a protruding towards the outer periphery of the holder 141, and sides lit portions 146b and 146c extending from both ends of the central slit 146a towards the ends of the radial slits 145 and 146, and protruding in a reverse direction, that is, towards the opening 142. The holding section 143 formed in this manner by boring the peripheral slit 146 has its central widened portion 143a supported by a pair of continuous narrow arm portions 143b and 143c, and is so designed that the widened portion 143a may be supported resiliently and radially of the holder 141 within the extent of the gap of the peripheral slit 146, with the continuous arm portions 143b and 143c being used as the resilient deflective portions.

The side edge of the widened portion 143a of the holding section 143 towards the opening 142 is formed with a disc retaining portion 148 protruding towards the opening 142, and having an engaging groove 147 to be engaged with the outer peripheral portion 126a of the small disc 126, as shown in Figure 12. Therefore, the distance from the centre of the holder 141 to the retaining portion 148 is selected to be smaller than the radius of the small disc 126 approximately by the gap of the peripheral slit 146. One side of each widened portion 143a is formed with finger rest projections 149 formed by recesses or grooves for facilitating the operation of resiliently deflecting or enlarging the diameter at the holding portion 143 during the operation of fitting the small disc 126.

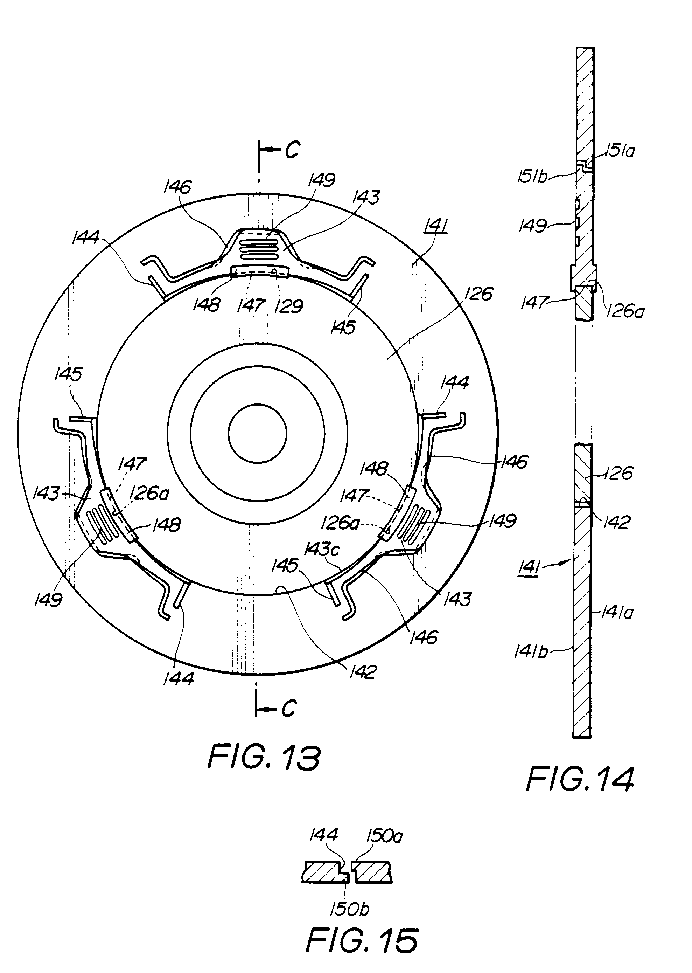

On the confronting sides of the slits 144, 145 and 146, steps or projections 150a, 150b, 151a and 151b are formed, as shown in Figures 14 and 15. When the small disc 126 is attached to the holder 141 to cause resilient deflection of the holding sections 143, the steps 150a, 150b, 151a and 151b are engaged with one another to close the slits 144, 145 and 146. Similar to the first embodiment, one side of the holder 141 is formed as a mirror surface 141a having an appearance similar to that of the recording surface 126b of the small disc 126, while its other side is formed as a printed surface bearing printed handling instructions, similar to the other side 126c of the small disc 126, for clarifying the attachment orientation of the small disc 126.

When attaching the small disc 126, the outer peripheral portion 126a is engaged with the engaging groove 147 of one of the holding portions 143, with the mirror surface 125a of the holder 141 lying on the same side as the recording surface 126b of the small disc 126, and the holding section 143 is resiliently deflected for increasing its diameter for fitting the small disc 126 in the opening 142. Following this operation, the remaining holding sections 143 are also resiliently deflected by applying finger pressure, so that the outer peripheral portion 126a of the small disc 126 can be engaged in the engaging grooves 147 of the holding sections 143. In this manner the small disc 126 is made as one with the holder 141, and the resulting assembly has the same diameter as that of a standard optical disc, so that it can be handled in the same manner.

The confronting sides of the slits 144, 145 and 146 are formed with the steps or projections 150a, 150b, 151a and 151b engaging with one another to close the slits 144, 145 and 146 when the small disc 126 is held therein. Thus, when the small disc 126 is held and attached to the disc player and irradiated with a laser beam from an optical pick-up device, leakage of the reading laser beam (or of the light beam from a detector in the case of a disc player having a detecting unit for detecting the start or end of disc loading) is prevented from occurring.

For further assuring tight sealing of the small disc 126 during attachment thereof, bosses or projections, not shown, may be provided on the opening 142 for sealing.

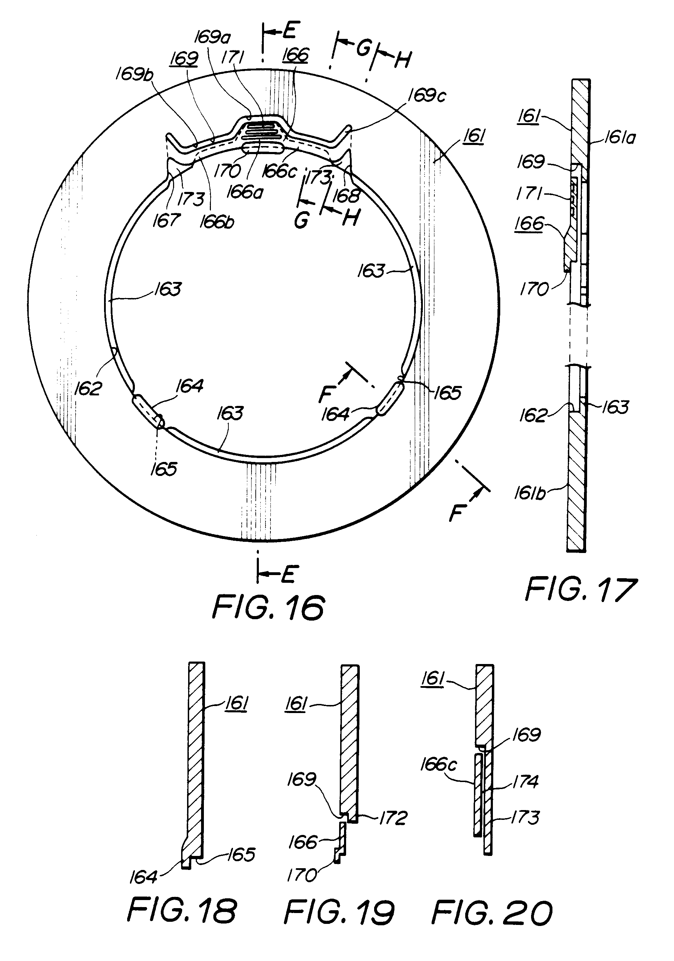

The third embodiment will now be described. In the second embodiment, three equiangular resiliently deflectable disc holding sections are provided at the inner periphery of the holder, these three holding sections, holding the small disc. However, only one resiliently deflectable disc holding section may suffice, as shown in Figure 16.

Similarly to the first and second embodiments, the apparatus of Figure 16 has an annular (toroidal) holder 161 having an outside diameter R1 equal to the diameter R3 of the standard optical disc 2 (12cm). The holder 161 is also formed of synthetic material, such as ABS resin, having a rigidity similar to the holder of the preceding embodiments and has a thickness about equal to that of the optical disc 2.

The inner periphery of the holder 161 is formed with a disc fitting opening 162 in which a small disc 126 having a disc diameter R2, for example 8cm, is fitted, as shown in Figure 16. On the periphery of the opening 162, supporting tongues 163 for supporting the outer peripheral portion 126a of the small disc 126 are projectingly formed from the one main surface 126b of the small disc 126 when the disc 126 is fitted into the opening 162. The tongues 163 are of a sufficiently reduced thickness and of a width to support only the non-signal recording area of the outer peripheral portion 126a of the small disc 126. On the perimeter of the opening 162 and at two places spaced apart a predetermined angular distance from each other, there are protrudingly formed from the other main surface 161b facing the surface provided with the tongues 163, tongues 164 for thrusting and supporting the outer peripheral portion 126a of the small disc 126 in cooperation with the tongues 163. The tongues 164 are projectingly formed towards the inner periphery of the opening 162 and of substantially the same width as that of the supporting tongues 163, as shown in Figure 18. The portions of each of the tongues 163 corresponding to the positions of the tongues 164 are formed as recesses 165 to assure the withdrawal of the metal mould during moulding of the tongues 164.

On the perimeter of the opening 162 there are formed disc holding sections 166 integrally with the holder 161, the holding sections 166 being in register with the tongues 164, and capable of being resiliently deflected radially of the holder 161. The holding sections 166 comprise a pair of cut-outs 167 and 168 spaced apart from each other at a prescribed distance, and extending from the opening 162 towards the outer periphery of the holder 161, and a peripheral slit 169 extending between near the ends of the slits 167 and 168. the central slit portion 169a of the slit 169 is protruded towards the outer periphery of the holder 161, while the two side slit portions 169b and 169c extending from the two ends of the central slit portion 169a towards the end positions of the cut-outs 167 and 168 are protruded in the opposite direction, that is, towards the opening 162. The holding section 166 thus formed by boring the slit 169 is so designed that the central widened portion 166a is supported by a pair of narrow continuous arm portions 166b and 166c, and the widened portion 166a is resiliently deflectably supported radially of the holder 161 within the extent of the gap of the peripheral slit 169, with these arm portions 166b and 166c as the resiliently deformable portions.

The side edge of the widened portion 166a lying towards the opening 162 is provided with a portion 170 projecting from the other main surface 161b of the holder 161 for thrusting and supporting the peripheral portion 126a of the small disc 126 (Figure 17). The distance from the centre of the holder 161 to the portion 170 is less than the radius of the small disc 126 approximately by the gap of the peripheral slit 169. On the other main surface 161b, the widened portion 166a is formed with finger rest projections 171, formed by recesses or slots, for facilitating the operation of resiliently deflecting or enlarging the diameter of the holding section 166 when fitting the small disc 126.

The portion of the holder 161 extending from the holding portion 166 to the narrow continuous arm portions 166b and 166c is cut-out on the main surface 161a thereof to provide for reduced thickness of the holding section 166. In the portion of the peripheral slit 169 corresponding to the cut-out portion of the holder 161, a step or projection 172 is provided for closing the slit 169 when the small disc 126 is fitted, for resiliently deforming the holding section 166 (Figure 19).

The portions of the holder 161 formed with the cut-outs 167 and 168 are formed with sealing tongues 173 projecting from the main surface 161a and extending from the roots of the arm portions 166b and 166c to the cut-outs 167 and 168, as shown in Figure 20. The tongues 173 are used for preventing the laser beam from an optical pick-up device from disc loading detecting means from being transmitted through the cut-outs 167 and 168. It is noted that, for assuring resilient deformation of the arm portions 166b and 166c despite the presence of the tongues 173, a slot 174 is formed for dividing the arm portions 166b and 166c as shown in Figure 20.

As in the first and second embodiments, one side of the holder 161 is formed as a mirror surface having an appearance similar to that of the recording surface 126b of the small disc 126, while its other side is formed as a printed surface.

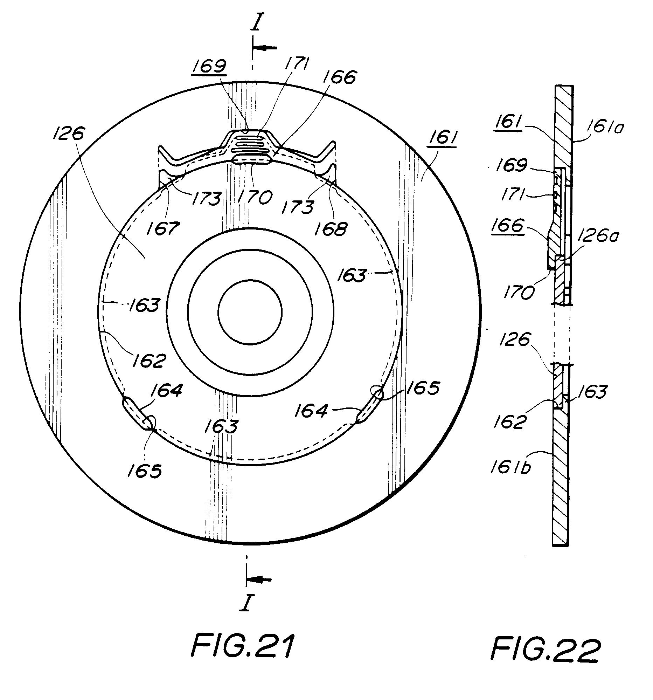

When attaching the small disc 126, the outer peripheral portion 126a of the small disc 126 is caused to rest on the supporting tongues 163, with the main surface 161a of the holder 161 lying on the same side as the recording surface 126b of the small disc 126, while the other main surface of the small disc 126 is placed within the opening 162 as it is thrusted and supported by the tongues 164. The small disc 126 is then fitted in the opening 162 while the holding section 166 is resiliently deflected so as to be enlarged in diameter, after which the small disc 126 is clamped by the tongues 163 and tongues 164, and the portion 170 by the springback of the holding sections 166. As shown in Figures 21 and 22, the small disc 126 is made as one with the holder 161.

In the foregoing embodiments, reference has been made to an optical disc. However, the invention may, for example, be applied to an opto-magnetic disc or to a magnetic disc.

The outside diameter of the supporting member for the recording medium and the diameter of the disc fitting opening can be selected as necessary.

## Claims

1. Apparatus for modifying the diameter of a disc-like recording medium (126) comprising a holder (125, 141, 161) larger outside in diameter than the disc-like recording medium (126), the holder (125, 141, 161) being designed to hold the disc-like recording medium (126) firmly therein and to enable signals recorded on the disc-like recording medium (126) to be read out while the disc-like recording medium (126) is held by the holder (125), characterised in that the holder (141) is a toroidal member (125, 141, 161) and is provided with holding means for the recording medium (126) comprising at least one resilient thrusting section (144, 145) which is independently resiliently deflectable in a direction radially of the recording medium (126) held thereby.

2. Apparatus according to claim 1, wherein the holder (126) holds a non-signal recording area on the outer periphery of the recording medium (125).

3. Apparatus according to claim 1, wherein the holder (125, 141, 161) is formed as a ring concentric with the centre of rotation of the recording medium (126) when the recording medium (126) is held therein.

4. Apparatus according to claim 1, wherein the holder (125, 141, 161) has a thickness approximately equal to that of the recording medium (126) when the recording medium (126) is held therein.

5. Apparatus according to claim 1, wherein the holder (125) has an opening (127) concentric with the centre of the recording medium (126) when held by the holder (125), and wherein the signal recording area (126b) of the recording medium (126) is exposed through the opening (127).

6. Apparatus according to claim 5, wherein the opening (127) exposes all the signal recording area (126b) of the recording medium (126) when the recording medium (126) is held therein.

7. Apparatus according to claim 5, wherein the holding means (128) comprises a holding member (128) for the recording medium (126) in the form of a resilient ring (128) attached to the perimeter of the opening (127).

8. Apparatus according to claim 5, wherein the inner perimeter of the holding member (128) is provided with a groove (129) into which the outer perimeter (126a) of the recording medium (126) is fitted.

9. Apparatus according to claim 8, wherein the outer perimeter of the holding member (128) is formed with a pair of clamping pieces (131, 132) for the holding member (128) which are formed with a plurality of engaging projections (134) and wherein the holding member (128) is mounted on the holder (125) by engaging the engaging projections (134) in a plurality of mating engaging openings (133) provided in the holder (125).

10. Apparatus according to claim 7, wherein the holding member (128) is formed of rubbery synthetic material.

11. Apparatus according to claim 1, wherein the holder (141) has an opening (142) concentric with the centre of the recording medium (126) being held in the opening (142) by the thrusting sections (144, 145) so as to be substantially flush with the holder (141), the signal recording area (126b) of the recording medium (126) being exposed through the opening (142).

12. Apparatus according to claim 11, wherein the opening (142) exposes all of the signal recording area (126b) of the recording medium (126) when the recording medium (126) is held therein.

13. Apparatus according to claim 11, wherein the thrusting sections (144, 145) are each formed by a pair of radial slits (144, 145) extending radially outwardly, and a peripheral slit (146) extending between near the end parts of the radial slits (144, 145).

14. Apparatus according to claim 13, wherein a fitting groove (147) into which the outer perimeter (126a) of the recording medium (126) is fitted is provided at the centre of the thrusting sections (144, 145).

15. Apparatus according to claim 14, wherein finger rest means (149) is provided for causing resilient deflection of the thrusting sections (144, 145).

16. Apparatus according to claim 13, wherein the opposing surfaces of the radial and peripheral slits (144, 145, 146) are formed with closure means (150a, 150b) for closing the radial and peripheral slits (144, 145, 146).

17. Apparatus according to claim 16, wherein the closure means (150a, 150b) comprises a step (150a, 150b).

18. Apparatus according to claim 11, wherein a plurality of the resilient thrusting sections (144, 145) are formed radially from the centre of the opening (142) at equiangular intervals from one another.

19. Apparatus according to claim 13, wherein the holding means (166) is provided with supporting tongues (163) extending from one side of the holder (161) towards the interior of the opening (162).

20. Apparatus according to claim 19, wherein the supporting tongues (163) are provided interruptedly.

21. Apparatus according to claim 20, wherein the holding means (166) is provided with thrusting tongues (164) protruding into spaces between adjacent supporting tongues (163) and from the other side of the holder (161) into the interior of the opening (162) for thrusting the recording medium (126) towards the supporting tongues (163).

22. Apparatus according to claim 21, wherein thrusting supporting tongues (164) for thrusting the recording medium (126) towards the supporting tongues (163) are provided substantially at the centre of the resilient thrusting sections (166).

23. Apparatus according to claim 22, wherein closure means (172) for closing the radial and peripheral slits (169) are provided in the holder (161).

24. Apparatus according to claim 23, wherein finger rest means (171) for permitting resilient deflection of the resilient thrusting sections (166) is provided on the surface of the resilient thrusting sections (166).

25. Apparatus according to claim 19, wherein the supporting tongues (162) are formed for supporting the non-recording area on the outer periphery of the recording medium (126).

## Patentansprüche

1. Vorrichtung zur Kodifizierung des Durchmessers eines plattenförmigen Aufzeichnungsmediums (126) mit einem Halter (125,141,161), der einen größeren Außendurchmesser als das plattenförmige Aufzeichnungsmedium (126) hat, wobei der Halter (125,141,161) dazu bestimmt ist, das plattenförmige Aufzeichnungsmedium (126) fest darin zu haltern und es auf dem plattenförmigen Aufzeichnungsmedium (126) aufgezeichneten Signalen zu ermöglichen, gelesen zu werden, während das plattenförmige Aufzeichnungsmedium (126) durch den Halter (125) gehaltert wird, dadurch gekennzeichnet, daß der Halter (141) ein toroidales Teil (125,141,161) ist und mit Haltemitteln für das Aufzeichnungsmedium (126) mit wenigstens einem federnden Verschiebebereich (144,145) versehen ist, der in einer Richtung radial zum dadurch gehaltenen Aufzeichnungsmedium (126) selbstständig federnd auslenkbar ist.

2. Vorrichtung nach Anspruch 1, wobei der Halter (126) einen Nichtsignalaufzeichnungsbereich auf der äußeren Peripherie des Aufzeichnungsmediums (125) hält.

3. Vorrichtung nach Anspruch 1, wobei der Halter (125,141,161) als ein Ring gebildet ist, der konzentrisch mit dem Zentrum der Drehbewegung des Aufzeichnungsmediums (126) ist, wenn das Aufzeichnungsmedium (126) darin gehalten wird.

4. Vorrichtung nach Anspruch 1, wobei der Halter (125,141,161) eine Dicke hat, die ungefähr gleich der des Aufzeichnungsmediums (126) ist, wenn das Aufzeichnungsmedium (126) darin gehalten wird.

5. Vorrichtung nach Anspruch 1, wobei der Halter (125) eine Öffnung (127) hat, die konzentrisch mit dem Zentrum des Aufzeichnungsmediums (126) ist, wenn es durch den Halter (125) gehalten wird, und wobei der Signalaufzeichnungsbereich (166) des Aufzeichnungsmediums (126) durch die Öffnung (127) unverdeckt ist.

6. Vorrichtung nach Anspruch 5, wobei die Öffnung (127) den ganzen Signalaufzeichnungsbereich (126b) des Aufzeichnungsmediums (126) völlig bloßlegt, wenn das Aufzeichnungsmedium (126) darin gehalten wird.

7. Vorrichtung nach Anspruch 5, wobei die Haltemittel (128) ein Halteteil (128) für das Aufzeichnungsmedium (126) in Form eines federnden Ringes (128) umfassen, der an der Peripherie der Öffnung (127) befestigt ist.

8. Vorrichtung nach Anspruch 5, wobei die innere Peripherie des Halteteils (128) mit einer Nut (129) versehen ist, in der die äußere Peripherie (126a) des Aufzeichnungsmediums (126) eingefügt ist.

9. Vorrichtung nach Anspruch 8, wobei die äußere Peripherie des Halteteils (128) zwei Klemmstücke (131,132) für das Halteteil (128) aufweist, die durch eine Vielzahl von Eingriffsansätzen (134) gebildet sind und wobei der Halteteil (128) auf dem Halter (125) montiert ist, wobei er mit den Eingriffsansätzen (134) in einer Vielzahl von ineinandergreifenden Eingriffsöffnungen (133) eingreift, die im Halter (125) vorgesehen sind.

10. Vorrichtung nach Anspruch 7, wobei der Halteteil (128) aus gummiartigem Kunststoff besteht.

11. Vorrichtung nach Anspruch 1, wobei der Halter (141) eine Öffnung (142) aufweist, der konzentrisch mit dem Zentrum des Aufzeichnungsmediums (126) ist, das in der Öffnung (142) durch die Verschiebebereiche (144,145) gehalten wird, um so im wesentlichen mit dem Halter (141) eben zu sein, wobei der Signalaufzeichnungsbereich (126b) des Aufzeichnungsmediums (126) durch die Öffnung (142) bloßgelegt ist.

12. Vorrichtung nach Anspruch 11, wobei die Öffnung (142) den ganzen Signalaufzeichnungsbereich (126b) des Aufzeichnungsmediums (126) bloßlegt, wenn das Aufzeichnungsmedium (126) darin gehalten wird.

13. Vorrichtung nach Anspruch 11, wobei die Verschiebebereiche (144,145) jeweils durch zwei radiale Schlitze (144,145) gebildet sind, die sich radial nach außen erstrecken, sowie durch einen peripheren Schlitz (146), der sich zwischen den und in der Nähe der Endteile der radialen Schlitze (144,145) ausdehnt.

14. Vorrichtung nach Anspruch 13, wobei eine Einfügenut (147), in der die äußere Peripherie (126a) des Aufzeichnungsmediums (126) eingefügt ist, beim Zentrum der Verschiebebereiche (144,145) vorgesehen ist.

15. Vorrichtung nach Anspruch 14, wobei fingerartige Stützmittel (149) vorgesehen sind, um eine federnde Auslenkung der Verschiebebereiche (144,145) zu verursachen.

16. Vorrichtung nach Anspruch 13, wobei die gegenüberliegenden Oberflächen der radialen und peripheren Schlitze (144,145,146) Verschlußmittel (150a,150b) aufweisen, um die radialen und peripheren Schlitze (144,145,146) zu verschließen.

17. Vorrichtung nach Anspruch 16, wobei die Verschlußmittel (150a,150b) Stufen (150a,150b) aufweisen.

18. Vorrichtung nach Anspruch 11, wobei eine Vielzahl von federnden Verschiebebereichen (144,145) radial vom Zentrum der Öffnung (142) in voneinander entfernten gleichwinkligen Intervallen gebildet ist.

19. Vorrichtung nach Anspruch 13, wobei die Haltemittel (166) mit Lagerzungen (163) versehen sind, die sich von der einen Seite des Halters (161) in Richtung auf das Innere der Öffnung (162) erstrecken.

20. Vorrichtung nach Anspruch 19, wobei die Lagerzungen (163) mit Unterbrechungen vorgesehen sind.

21. Vorrichtung nach Anspruch 20, wobei die Haltemittel (166) Schiebezungen (164) aufweisen, die in Lücken zwischen den angrenzenden Lagerzungen (163) und von der anderen Seite des Halters (161) in das Innere der Öffnung (162) hineinragen, um das Aufzeichnungsmedium (126) in Richtung auf die Lagerzungen (163) zu verschieben.

22. Vorrichtung nach Anspruch 21, wobei Schiebelagerzungen (164) zum Verschieben des Aufzeichnungsmediums (126) in Richtung auf die Lagerzungen (163) im wesentlichen im Zentrum der federnden Verschiebebereiche (166) vorgesehen sind.

23. Vorrichtung nach Anspruch 22, wobei Schließmittel (172) zum Verschließen der radialen und peripheren Schlitze (169) im Halter (161) vorgesehen sind.

24. Vorrichtung nach Anspruch 23, wobei fingerartigen Stützmittel (171) zur Ermöglichung einer federnden Auslenkung der federnden Verschiebebereiche (166) auf der Oberfläche der federnden Verschiebebereiche (166) vorgesehen sind.

25. Vorrichtung nach Anspruch 19, wobei die Lagerzungen (162) gebildet sind, um den Nichtaufzeichnungsbereich auf der äußeren Peripherie des Aufzeichnungsmediums (126) zu lagern.

## Revendications

1. Appareil destiné à modifier le diamètre d'un support d'enregistrement en forme de disque (126) comportant un support (125, 141, 161) de diamètre extérieur plus grand que le support d'enregistrement en forme de disque (126), le support (125, 141, 161) étant conçu pour maintenir fermement le support d'enregistrement en forme de disque (126) et pour permettre à des signaux enregistrés sur le support d'enregistrement en forme de disque (126) d'être lus alors que le support d'enregistrement en forme de disque (126) est maintenu par le support (125), caractérisé en ce que le support (141) est un élément toroïdal (125, 141, 161) et est pourvu de moyens de maintien pour le support d'enregistrement (126) comportant au moins une section de poussée élastique (144, 145) qui peut être fléchie élastiquement de manière indépendante dans une direction radiale par rapport au support d'enregistrement (126) maintenu.

2. Appareil selon la revendication 1, dans lequel le support (126) maintient une zone sans enregistrement de signal sur la périphérie extérieure du support d'enregistrement (125).

3. Appareil selon la revendication 1, dans lequel le support (125, 141, 161) est sous la forme d'un anneau concentrique au centre de rotation du support d'enregistrement (126) lorsque le support d'enregistrement (126) y est maintenu.

4. Appareil selon la revendication 1, dans lequel support (125, 141, 161) a une épaisseur approximativement égale à celle du support d'enregistrement (126) lorsque le support d'enregistrement (126) y est maintenu.

5. Appareil selon la revendication 1, dans lequel le support (125) a une ouverture (127) concentrique au centre du support d'enregistrement (126) lorsqu'il est maintenu par le support (125), et dans lequel la zone d'enregistrement de signal (126b) du support d'enregistrement (126) est exposée à travers l'ouverture (127).

6. Appareil selon la revendication 5, dans lequel l'ouverture (127) expose toute la zone d'enregistrement de signal (126b) du support d'enregistrement (126) lorsque le support d'enregistrement (126) y est maintenu.

7. Appareil selon la revendication 5, dans lequel les moyens de maintien (128) comportent un élément de maintien (128) pour le support d'enregistrement (126) sous la forme d'un anneau élastique (128) fixé sur le périmètre de l'ouverture (127).

8. Appareil selon la revendication 5, dans lequel le périmètre interne de l'élément de maintien (128) est pourvu d'une rainure (129) dans laquelle se loge le périmètre externe (126a) du support d'enregistrement (126).

9. Appareil selon la revendication 8, dans lequel le périmètre externe de l'élément de maintien (128) est formé avec une paire de pièces de serrage (131, 132) pour l'élément de maintien (128) qui est formée avec plusieurs saillies d'engagement (134) et dans lequel l'élément de maintien (128) est monté sur le support (125) en engageant les saillies d'engagement (134) dans plusieurs ouvertures d'engagement (133) prévues dans le support (125).

10. Appareil selon la revendication 7, dans lequel l'élément de maintien (128) est réalisé en matière caoutchouteuse synthétique.

11. Appareil selon la revendication 1, dans lequel le support (141) a une ouverture (142) concentrique au centre du support d'enregistrement (126) qui est maintenu dans l'ouverture (142) par les sections de poussée (144, 145) de façon à sensiblement affleurer le support (141), la zone d'enregistrement de signal (126b) du support d'enregistrement (126) étant exposée à travers l'ouverture (142).

12. Appareil selon la revendication 11, dans lequel l'ouverture (142) expose toute la zone d'enregistrement de signal (126b) du support d'enregistrement (126) lorsque le support d'enregistrement (126) y est maintenu.

13. Appareil selon la revendication 11, dans lequel les sections de poussée (144, 145) sont formées chacune par une paire de fentes radiales (144, 145) s'étendant radialement vers l'extérieur, et une fente périphérique (146) s'étendant entre les parties d'extrémités des fentes radiales (144, 145).

14. Appareil selon la revendication 13, dans lequel une rainure de montage (147) dans laquelle se loge le périmètre extérieur (126a) du support d'enregistrement (126) est prévue au centre des sections de poussée (144, 145).

15. Appareil selon la revendication 14, dans lequel des moyens de passage de doigt (149) sont prévus pour entrainer une flexion élastique des sections de poussée (144, 145).

16. Appareil selon la revendication 13, dans lequel les surfaces opposées des fentes radiales et périphérique (144, 145, 146) sont formées avec des moyens de fermeture (150a, 150b) destinés à fermer les fentes radiales et périphérique (144, 145, 146).

17. Appareil selon la revendication 16, dans lequel les moyens de fermeture (150a, 150b) comportent un épaulement (150a, 150b).

18. Appareil selon la revendication 11, dans lequel plusieurs des sections de poussée élastiques (144, 145) sont formées radialement depuis le centre de l'ouverture (142) à intervalles équi-angulaires l'une de l'autre.

19. Appareil selon la revendication 13, dans lequel les moyens de maintien (166) sont pourvus de languettes de support (163) s'étendant depuis un côté du support (161) en direction de l'intérieur de l'ouverture (162).

20. Appareil selon la revendication 19, dans lequel les languettes de support (163) sont prévues de manière interrompue.

21. Appareil selon la revendication 20, dans lequel les moyens de maintien (166) sont pourvus de languettes de poussée (164) qui dépassent dans des espaces entre des languettes de support (163) adjacentes et depuis l'autre côté du support (161) à l'intérieur de l'ouverture (162) afin de pousser le support d'enregistrement (126) en direction des languettes de support (163).

22. Appareil selon la revendication 21, dans lequel des languettes de support de poussée (164) destinées à pousser le support d'enregistrement (126) en direction des languettes de support (163) sont prévues sensiblement au centre des sections de poussée élastiques (166).

23. Appareil selon la revendication 22, dans lequel des moyens de fermeture (172) destinés à fermer les fentes radiales et périphérique (169) sont prévus dans le support (161).

24. Appareil selon la revendication 23, dans lequel des moyens de passage de doigt (171) destinés à permettre une flexion élastique des sections de poussée élastiques (166) sont prévus sur la surface des sections de poussée élastiques (166).

25. Appareil selon la revendication 19, dans lequel les languettes de support (162) sont formées afin de supporter la zone sans enregistrement sur la périphérie extérieure du support d'enregistrement (126).
